# EUROPEAN PATENT APPLICATION

(11) **EP 1 679 360 A1**
(43) Date of publication of application: **12.07.2006**
(21) Application number: 05111369.4
(22) Date of filing: 28.11.2005
(51) Int. Cl.: C10M 141/06, C10M 141/08, A01N 35/02, A01P 1/00, A01N 47/12, A01N 51/00, A01N 31/08, A01N 43/80, A01N 43/40, A01N 55/02

(54) **Use of formaldehyde and formaldehyde-releasing compounds in a composition for controlling mycobacteria**

(30) Priority: 07.12.2004 DE 102004059041
(71) Applicant: AIR LIQUIDE SANTE (INTERNATIONAL), 75007 Paris (FR); SCHÜLKE & MAYR GMBH, 22851 Norderstedt (DE)
(72) Inventor: Beilfuss, Wolfgang Dr., 22339, Hamburg (DE); Krull, Ingo Dr., 25499, Tangstedt (DE); Gradtke, Ralf Dr., 25436, Tornesch (DE); Steinhauer, Katrin, 22529, Hamburg (DE)
(74) Representative: Conan, Philippe Claude

(57) **Abstract**

The invention relates to the use of a bactericide selected from formaldehyde and formaldehyde-releasing compounds in a composition for controlling mycobacteria, for example in a cooling lubricant.

## Description

The present invention relates to the use of formaldehyde and formaldehyde-releasing compounds in a composition for controlling mycobacteria, for example in a cooling lubricant.

A mycobactericidal activity of formaldehyde is generally known (see, inter alia, S.S. Block, ed., Disinfection, Sterilization and Preservation, 5^{th} edition, 2001, Lippincott, Williams & Wilkins). Furthermore, DE 198 42 116 A1, DE 199 61 621 A1 and DE 197 22 858 A1 describe the use of formaldehyde- and formal-containing formulations in cooling lubricants.

However, it has been found that, for example in the metalworking industry, occupational diseases due to process fluids and cooling lubricant emulsions occur which belong to the group of the exogenous allergic alveolitides (hypersensitivity pneumonitis (HP)). Exogenous allergic alveolitides are acute, subacute and chronic lung inflammations which are caused by inspired antigens. These include farmer's lung, bird breeder's lung and air-conditioner disease, and also a number of more rarely observed disorders. Exposure to cooling lubricants is, in addition, associated with asthma and possibly even cancer.

Mycobacteria are under discussion as a possible cause of exogenous allergic alveolitides. Mycobacteria are comparatively resistant to biocidal active compounds, in particular at concentration ranges as are customarily used in process liquids. Therefore, active preparations are being sought which, in customary concentrations, actively suppress the growth of microbacteria in process liquids and significantly reduce the risk of occupational diseases on handling these liquids. Previously, for this, inter alia, bactericides based on phenols have been proposed.

Because the biocidal active compound which has been predominantly used in cooling lubricants is 2,2',2"-(hexahydro-1,3,5-triazine-1,3,5-triyl)triethanol (HHT), inadequate activity against mycobacteria and even specific growth promotion of mycobacteria when this bactericide is overdosed has been suspected. Therefore, at least one internationally active enterprise of the automobile industry has stipulated that triazines and other compounds releasing formaldehyde shall no longer be permitted to be used as bactericides in the formulations of metalworking fluids (MWFs). The search for alternatives has therefore been restricted to bactericides whose action is not based on the specific biocidal activity of formaldehyde condensation products (it is assumed that the hydrolysis of formaldehyde condensation products on the cell wall of the mycobacterium effectively denatures its peptidoglucan structure and thus leads to cell death).

It was an object of the invention to provide bactericides which, when used in customary concentrations, actively suppress the growth of mycobacteria in process liquids and significantly reduce the risk observed using HHT of occupational diseases on handling these liquids.

It has now surprisingly been found that, by the use of a bactericide selected from formaldehyde and formaldehyde-releasing compounds the abovementioned object is achieved and the problems of the prior art are overcome. The invention is thus based on the finding that formaldehyde and formaldehyde-releasing compounds (different from HHT) in a composition for controlling mycobacteria
i) even in the case of overdose do not promote the growth of mycobacteria and
ii) are more active against mycobacteria, that is to say at the same concentration are more active than HHT and/or the same activity against mycobacteria is achieved at a lower concentration than with HHT.

The invention thus consists in the use of a bactericide selected from formaldehyde and formaldehyde-releasing compounds in a composition for controlling mycobacteria which is characterized in that in the case of overdose of the bactericide, no promotion of the growth of mycobacteria occurs.

The invention also consists in the use of a bactericide selected from formaldehyde and formaldehyde-releasing compounds in a composition for controlling mycobacteria which is characterized in that the activity of the bactericide against mycobacteria is greater at the same concentration than the activity of 2,2',2"-(hexahydro-1,3,5-triazine-1,3,5-triyl)triethanol or the same activity against mycobacteria as using 2,2',2"-(hexahydro-1,3,5-triazine-1,3,5-triyl)triethanol is achieved at a lower concentration of the bactericide.

According to the invention, mycobacteria are preferably controlled in industrial products, such as cooling lubricant emulsions, water-based process liquids, cleaning compositions and rinsing liquids.

The formaldehyde-releasing compound used according to the invention is preferably selected from 3,3'-methylenebis[5-methyloxazolidine], 1,3-bis(hydroxymethyl)urea, (ethylenedioxy)dimethanol, 2-(2-butoxyet-hoxy)ethoxymethanol, tetrahydro-1,3,4,6-tetrakis(hydroxymethyl)imidazo[4,5-d]imidazole-2,5(1H,3H)-dione, α,α' , α*"-*trimethyl-1,3,5-triazine-1,3,5-(2H,4H,6H)-triethanol and mixtures thereof. Frequently, mixtures of substances and substances which are not clearly identified which are in dynamic equilibrium are present. The formaldehyde-releasing compounds preferably used according to the invention are condensation products of formaldehyde (or paraformaldehyde) and alkanolamines and/or glycols and/or urea or urea derivatives. Accordingly, the following are used according to the invention, for example:
a) the condensation product of isopropanolamine and paraformaldehyde (active compound: 3,3'-methylene-bis[5-methyloxazolidine]), if appropriate stabilized with antioxidants,
b) the condensation product of isopropanolamine, paraformaldehyde and urea, if appropriate stabilized with antioxidants,
c) the condensation product of isopropanolamine, paraformaldehyde, urea and ethylene glycol, if appropriate stabilized with antioxidants,
d) the condensation product of paraformaldehyde, ethylene glycol, butyl diglycol and urea (active compounds: (ethylenedioxy)dimethanol, 2-(butoxy-ethoxy)ethoxymethanol and 1,3-bis(hydroxymethyl)-urea),
e) the condensation product of paraformaldehyde, ethylene glycol and urea (active compounds: (ethylenedioxy)dimethanol and 1,3-bis(hydroxymethyl)urea),
f) the condensation product of isopropanolamine and paraformaldehyde (active compound: α,α*'*,α"-trimethyl-1,3,5-triazine-1,3,5-(2H,4H,6H)-tri-ethanol),
g) the condensation product of formaldehyde (or paraformaldehyde) and glyoxal and urea, or of formaldehyde (or paraformaldehyde) and glycoluril, (active compound: tetrahydro-1,3,4,6-tetrakis(hydroxymethyl)imidazo[4,5-d]imidazole-2,5(1H,3H)-dione).

In addition, preference is given to benzyl alcohol hemiformal (the condensation product of benzyl alcohol and formaldehyde) and 4,4-dimethyloxazolidine, 1-(3-chlorallyl)-3,5,7-triaza-1-azoniatricyclo[3.3.1.13,7]-decane chloride, bronopol, 7a-ethyldihydro-1H,3H,5H-oxazolo[3,4-c]oxazole.

The effects which are surprisingly observed also occur when use is made of a mixture of the inventively used bactericide with one or more active compounds. This is shown in the activity of such an inventive mixture as compared with the activity of HHT and if appropriate also in comparison with the activity of a mixture of HTT with the active compound(s). According to the invention, the bactericide is thus used, preferably together with one or more other active compounds selected from 3-iodo-2-propinylbutyl carbamate, N-cyclohexyl-N-nitrosohydroxylamine salts (preferably the potassium salt), phenols such as o-phenylphenol, p-chloro-m-cresol, p-chloro-m-xylenol, alcohols such as phenoxyethanol, phenoxypropanols, thiabendazole or its salts, p-[(diiodomethyl)sulfonyl]toluene, 2-bromo-2-(bromomethyl)pentanedinitrile, isothiazol-3-ones such as 5-chloro-2-methyl-2H-isothiazol-3-one and/or 2-methyl-2H-isothiazol-3-one, 1,2-benzisothiazol-3(2H)-one, n-butyl-1,2-benzisothiazol-3(2H)-one and 2-octyl-3(2H)isothiazol-3-one and also salts of 2-mercaptopyridine N-oxide, such as the sodium or zinc salt (Pyrion-Na, Zn-pyrithione). According to the invention, particularly preferably use is made of mixtures with Pyrion-Na and/or isothiazolones, for example mixtures with 1,2-benzisothiazol-3(2H)-one or 2-octyl-3(2H)-isothiazol-3-one.

The invention further relates to the use of isothiazol-3-ones to increase the mycobactericidal activity of formaldehyde and formaldehyde-releasing compounds. As ensues, in particular, from the examples, isothiazol-3-ones, which are not known themselves as typical mycobactericidal active compounds, surprisingly increase the mycobactericidal activity of formaldehyde and formaldehyde-releasing compounds.

According to the invention, the bactericide is preferably used for controlling *M. chelonae, M. immunogenum, M. abscessus,* M. *avium* and *M. terrae,* preferably non-tuberculous rapidly-growing mycobacteria, such as *M. immunogenum* and *M. chelonae.*

According to the present invention it is possible to control mycobacteria more actively, in particular in cooling lubricants. This includes the fact that the inventively used bactericides can be overdosed without the risk of promotion of the growth of mycobacteria occurring. Here, the expression "overdosing" denotes a concentration of the bactericide which is higher than the minimum usage concentration of the bactericide. The "minimum usage concentration" of the bactericide is the concentration at which it is sufficient to reduce the number of mycobacteria of a sample, or to inhibit the growth, significantly, preferably by the factor 10, more preferably by the factor 100, and particularly preferably by the factor 1000.

Certain concentration ranges have proved to be surprisingly active for the inventively used bactericide. For example, the condensation product of paraformaldehyde, ethylene glycol, butyl diglycol and urea (active compounds: (ethylenedioxy)dimethanol, 2-(butoxyethoxy)ethoxymethanol and 1,3-bis(hydroxymethyl)urea), even at a usage concentration of 0.15% by weight, is active against *M. chelonae,* whereas 0.3% by weight of HHT is necessary therefor. The required amount of formaldehyde-releasing compound can therefore be selected to be lower for the same activity.

When use is made of an inventive bactericide (or a plurality of inventive bactericides in combination), if appropriate in a mixture with one or more other active compounds, the recommended usage concentration is thus preferably less than 0.3% by weight, such as less than 0.25% by weight, for example 0.1 to 0.2% by weight, preferably 0.1 to 0.15% by weight.

The advantages of the present invention follow, in particular from the following examples.

### EXAMPLES

### Method for determining the activity of bactericidal solutions against mycobacteria

- Mycobacteria cultured in accordance with DGHM (2001)¹,
- 5 ml of double-concentrated test solution are admixed with 5 ml of double-concentrated liquid medium (7H9 medium),
- addition of 0.1 ml of mycobacterial suspension (titre: 1 × 10⁹ - 8 × 10⁹ CFU/ml; production of the mycobacterial suspension in accordance with DGHM (2001)¹,
- incubation of the test tubes at 28°C or 37°C (depending on the mycobacterial test strain) for 3 weeks (static culture),
- study of the inhibitory activity of the individual dilutions by examination for optical turbidity, caused by bacterial growth, and also additional streaking on 7H10-agar,
- incubation of the agar plates for 3 weeks at 28°C or 37°C (according to test strain),
- inspection of the agar plates for mycobacterial growth.
   ¹ Gebel, J., H.P. Werner, Kirsch-Altena, K., Bansemir, K. (2001): Standardmethoden der DGHM zur Prüfung chemischer Desinfektionsverfahren [Standard methods of the DGHM [German Society for Hygiene and Microbiology] for testing chemical disinfection methods], mhp Verlag, Wiesbaden.

All percentages are by weight (% by weight).

Expressions used in the examples mean as follows:
*M. terrae:* ATCC 15755 (37°C),
*M. chelonae:* ATCC 35725 (28°C),
*M. chelonae:* ATCC 19236 (37°C),
*M. immunogenum:* ATCC 700505 (28°C, 37°C),
*: Concentration in undiluted MIC test solution (0.6% strength),
MIC: minimum inhibitory concentration.

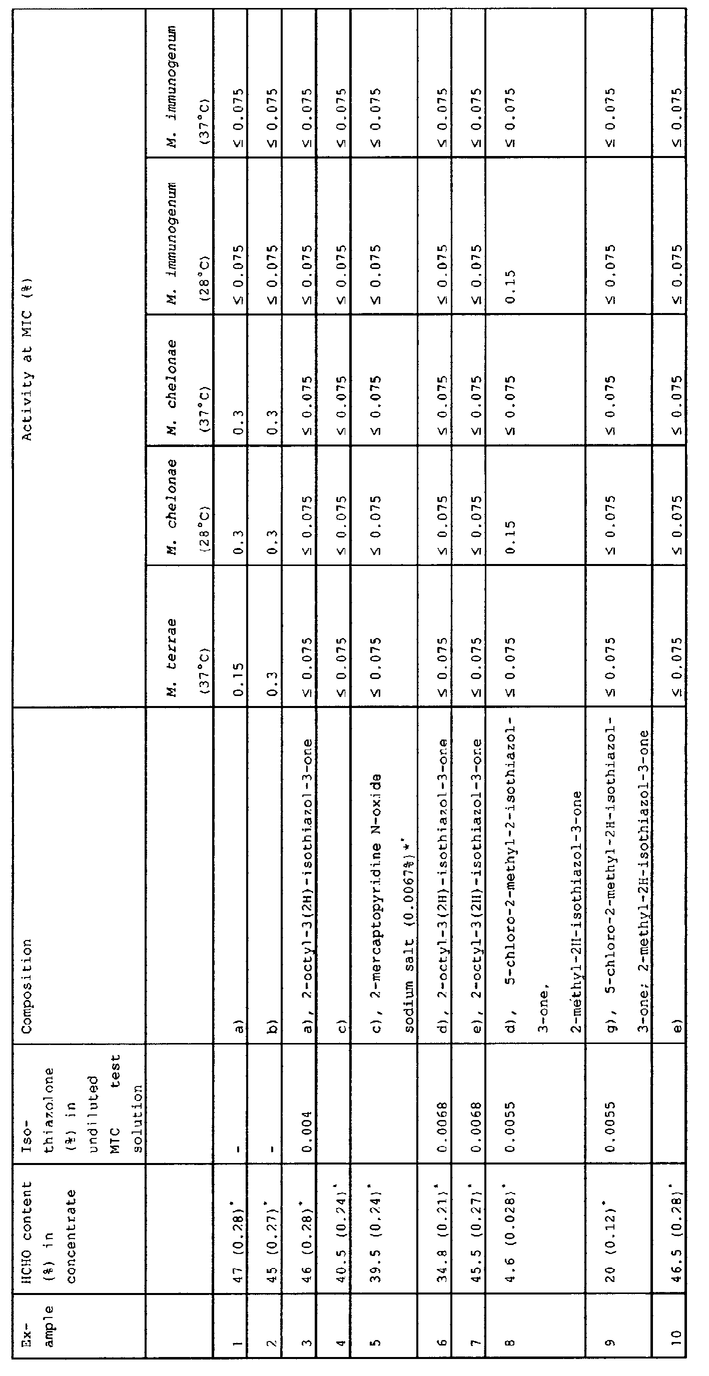

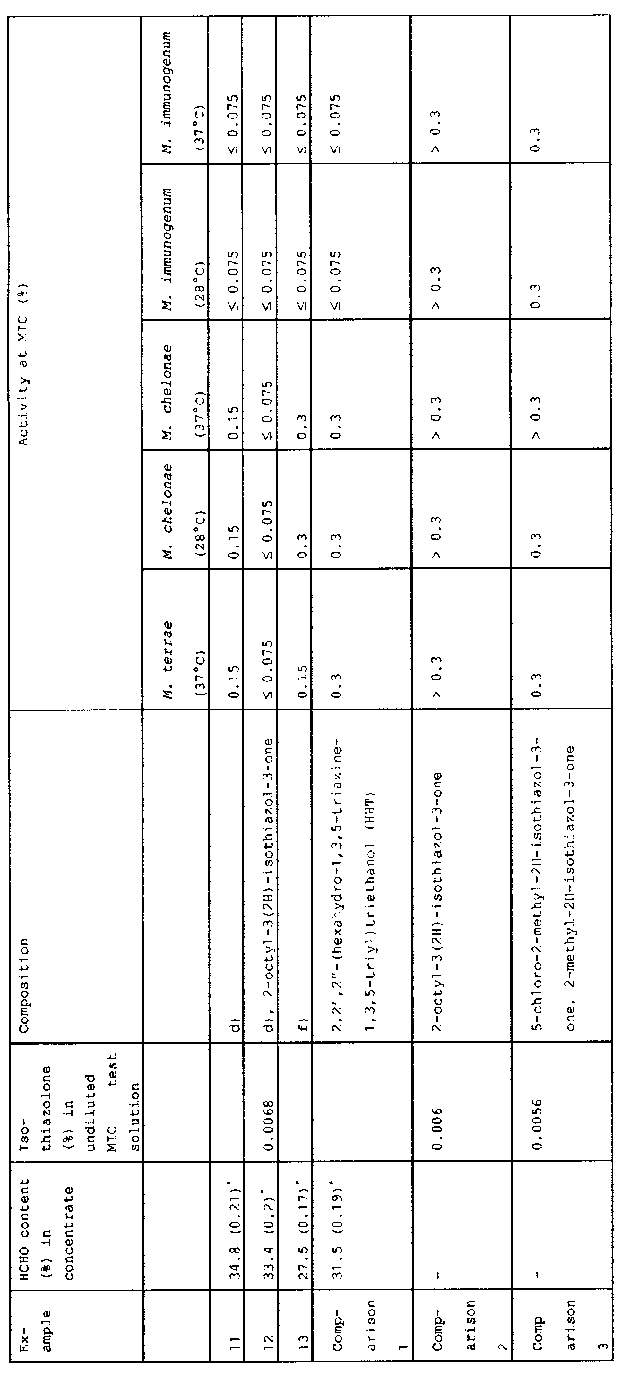

## Claims

1. Use of a bactericide selected from formaldehyde and formaldehyde-releasing compounds in a composition for controlling mycobacteria, **characterized in that** in the case of overdose of the bactericide, no promotion of the growth of mycobacteria occurs.

2. Use of a bactericide selected from formaldehyde and formaldehyde-releasing compounds in a composition for controlling mycobacteria, **characterized in that** the activity of the bactericide against mycobacteria is greater at the same concentration than the activity of 2,2',2"-(hexahydro-1,3,5-triazine-1,3,5-triyl)triethanol or the same activity against mycobacteria as using 2,2*'*,2*''*-(hexahydro-1,3,5-triazine-1,3,5-triyl)triethanol is achieved at a lower concentration of the bactericide.

3. Use according to Claim 1 or Claim 2, **characterized in that** the formaldehyde-releasing compound is selected from 3,3'-methylenebis[5-methyloxazolidine], 1,3-bis(hydroxymethyl)urea, (ethylenedioxy)dimethanol, 2-(2-butoxy-ethoxy)ethoxymethanol, tetrahydro-1,3,4,6-tetrakis(hydroxymethyl)imidazo[4,5-d]imidazole-2,5(1H,3H)-dione, α,α',α"-trimethyl-1,3,5-triazine-1,3,5-(2H,4H,6H)-triethanol and mixtures thereof.

4. Use according to one of the preceding claims, **characterized in that** the bactericide is used in a mixture with one or more other active compounds selected from 3-iodo-2-propinylbutyl carbamate, N-cyclohexyl-N-nitrosohydroxylamine salts (preferably the potassium salt), phenols such as o-phenylphenol, isothiazol-3-ones such as 5-chloro-2-methyl-2H-isothiazol-3-one and/or 2-methyl-2H-isothiazol-3-one, 1,2-benzisothiazol-3(2H)-one, n-butyl-1,2-benzisothiazol-3(2H)-one and 2-octyl-3(2H)-isothiazol-3-one and also salts of 2-mercaptopyridine N-oxide, such as the sodium or zinc salt (Pyrion-Na, Zn-pyrithione), preferably in a mixture with Pyrion-Na, 1,2-benzisothiazol-3(2H)-one or 2-octyl-3(2H)-isothiazol-3-one.

5. Use according to one of the preceding claims, **characterized in that** the mycobacterium is selected from M. *chelonae, M. immunogenum, M. abscessus,* M. *avium* and M. terrae, preferably M. *chelonae* and M. *immunogenum.*

6. Use of isothiazol-3-ones to increase the mycobactericidal activity of formaldehyde and formaldehyde-releasing compounds.
